# EUROPÄISCHE PATENTSCHRIFT

(11) **EP 3 023 688 B1**
(45) Veröffentlichungstag und Bekanntmachung des Hinweises auf die Patenterteilung: **11.12.2019**
(21) Anmeldenummer: 15199864.8
(22) Anmeldetag: 30.10.2014
(51) Int. Cl.: F21S 8/02, F21V 15/01, H02G 3/12, F21V 27/02, F21V 21/04

(54) **EINBAUGEHÄUSE FÜR ELEKTRISCHE LEUCHTEN**
BUILT-IN HOUSING FOR ELECTRICAL LIGHTS
BOITIER DE MONTAGE POUR ECLAIRAGES ELECTRIQUES

(30) Priorität: 08.11.2013 DE 102013112305
(43) Veröffentlichungstag der Anmeldung: 25.05.2016
(62) Teilanmeldung aus: 14401101.2
(73) Patentinhaber: Kaiser GmbH & Co. KG, 58579 Schalksmühle (DE)
(72) Erfinder: Siebeking, Thomas, 58313 Lüdenscheid (DE)
(74) Vertreter: Köchling, Conrad-Joachim

(56) Entgegenhaltungen:
- EP-A1- 2 466 198
- EP-A2- 2 375 133
- WO-A1-2008/061082
- WO-A2-2008/036873

## Beschreibung

Die Erfindung betrifft ein Einbaugehäuse für elektrotechnische Einbauten und Leuchten zum Einbau im Leichtbauhohldecken oder -wände, wobei diese eine dem Querschnitt des Einbaugehäuses angepasste Einbauöffnung aufweisen, in die das Einbaugehäuse einsetzbar ist, wobei das Einbaugehäuse einen Boden und eine vom Boden abragende umlaufende Wandung aufweist, wobei der Boden mindestens außenseitig auf seiner dem Inneren des Einbaugehäuses abgewandten Fläche Wellenstrukturen aufweist.

Einbaugehäuse zum Einbau in Leichtbaudecken oder Hohldecken sind im Stand der Technik vielfach bekannt. Zum Einbau werden die entsprechenden Decken-oder Wandbereiche mit einer ausreichend bemessenen Lochung versehen. In diese Lochung kann dann von der Außenseite her ein entsprechendes Einbaugehäuse eingesetzt werden, welches üblicherweise mit Spreizklammern oder Haltemitteln ausgestattet ist, damit das Gehäuse in der Einbausituation beispielsweise von hinten gegen den Wandausschnitt angespannt und in dieser Weise fixiert werden kann.

Im Einbauzustand des Einbaugehäuses stützt sich dieses mit seinem Boden beispielsweise an einer Dämmfolie oder an Dämmmaterial ab.

Der Boden bildet dabei insgesamt eine direkte Auflagefläche an der Folie oder dergleichen.

Sofern in das Gehäuse Leuchten oder LED eingebaut sind, wird die von diesen abgegebene Wärme auch vom Boden über Wärmekonvektion abgegeben.

Aus der EP 2 466 198 A1 ist ein Einbaugehäuse gattungsgemäßer Art bekannt. Ebenso sind solche Gehäuse in der EP 2 75 133 A2 und der WO 2008/036873 A2 beschrieben.

Aus der EP 2 466 198 A1 ist eine Ausgestaltung eines Einbaugehäuses bekannt, bei der das Gehäuse oder wesentliche Gehäuseteile aus wärmeleitendem Werkstoff bestehen, sodass die Wärme, die von dem Leuchtmittel erzeugt wird, abgeführt werden kann. Um diese Wärme noch besser abzuführen, sind rückseitig Wärmesenken ausgebildet, die auch in Form von Rippenstrukturen vorgesehen sind. Diese dienen dazu, die vom Leuchtmittel abgegebene Wärme zu verteilen und abzuführen.

Auch aus der EP 2 375 133 A2 ist eine konstruktive Lösung bekannt, bei der die Wärmeenergie des Leuchtmittels abgeführt und verteilt werden kann, wozu Rippenstrukturen an einem als Kühlkörper dienenden Element vorgesehen sind.

Ebenso ist bei der aus der WO 2008/036873 A2 bekannten Lösung ein wärmeerzeugendes Mittel mit einer Wärmesenke kombiniert, um die vom Leuchtmittel erzeugte Wärme abzuführen. Diese Wärmesenke weist vorstehende Rippen auf, um die Wärme abführen zu können und besser verteilen zu können.

Ausgehend von diesem Stand der Technik liegt der Erfindung die Aufgabe zugrunde, die Lebensdauer und Systemsicherheit des Einbaugehäuses und die Luftzirkulation zu verbessern.

Zur Lösung dieser Aufgabe wird vorgeschlagen, dass die Wellenstrukturen zum Boden hin oder in der Bodenfläche breite Wellentäler bilden und die vom Boden abragenden Wellenberge durch gegenüber den Wellentälern schmalere Bereiche gebildet sind.

Durch diese Wellenstrukturen wird erreicht, dass im Einbauzustand des Einbaugehäuses, wenn dieses sich mit seinem Boden beispielsweise an einer Dämmfolie oder an Dämmmaterial abstützt, die direkte Auflagefläche an dieser Folie oder dergleichen minimiert wird, da sich nur die vorragenden Enden der Wellenstrukturen an der Dampfsperre oder dergleichen Folie abstützen. Zudem wird hierdurch die Wärmefortleitung zu dieser anliegenden Struktur minimiert. Andererseits erhöht die durch die Wellenstruktur vergrößerte Gehäuseoberfläche des Bodens eine gute Wärmekonvektion der durch die in das Gehäuse eingebaute Leuchte oder LED abgegebenen Wärme. Es wird insgesamt damit die Lebensdauer und Systemsicherheit des Einbaugehäuses verbessert. Zudem wird die Luftzirkulation durch diese Ausgestaltung verbessert.

Bevorzugt ist dabei vorgesehen, dass die Wellenstrukturen zur Seitenfläche des Einbaugehäuses offen ausmündende Endbereiche aufweisen.

Durch eine solche Ausgestaltung wird quasi eine Strömungsrinne zur Verfügung gestellt, durch die Luft ungehindert zirkulieren kann, was für den oben geschilderten Effekt vorteilhaft ist.

Insbesondere ist bevorzugt vorgesehen, dass die Wellenstrukturen aus einer Vielzahl von parallel zueinander ausgerichteten Wellen gebildet sind.

Um eine Beschädigung der Dampfsperrfolie oder Isolierfolie in der Einbausolllage zu vermeiden, ist vorgesehen, dass die über den Boden vorragenden Endbereiche der Wellenstrukturen unter Vermeidung scharfer Kanten gerundet sind.

Aus dem gleichen Grunde ist vorgesehen, dass der Übergangsbereich vom Boden in die Wandung gerundet ist.

Um die Formhaltigkeit der Wellenstrukturen sicher zu stellen, kann vorgesehen sein, dass der Boden vollständig oder teilweise mindestens im Bereich der vorragenden Stege oder Wellenberge der Wellenstrukturen aus formstabilem Kunststoff besteht.

Hierdurch wird sichergestellt, dass die Wellenstrukturen nicht durch das auflastende Material (Dichtungsmaterial, Dampfsperre, Isolierfolie) verformt werden, sondern seine Form beibehält, sodass die gewünschte Luftzirkulation dauerhaft sichergestellt ist.

Hierbei kann zum Schutz der aufliegenden Folie oder Dampfsperre vorgesehen sein, dass der Boden außenseitig von einer Schicht aus elastischem Kunststoff überzogen ist.

Unter Umständen kann auch vorgesehen sein, dass der Boden vollständig oder teilweise aus elastischem Kunststoff besteht.

Hierbei ist besonders bevorzugt vorgesehen, dass in den Boden die vorragenden Stege oder Wellenberge der Wellenstrukturen aus formstabilem Kunststoff integriert sind.

Durch diese Ausgestaltung wird wiederum sichergestellt, dass die Form der Wellenberge und Stege nicht durch auflastendes Material flachgedrückt wird, sondern zum Zwecke der Luftzirkulation aufrechterhalten bleibt.

Unter dem Begriff "elastischer Kunststoff" sind Elastomere bzw. Thermoelaste zu verstehen. Unter dem Begriff formstabiler Kunststoff sind insbesondere Thermoplaste und Duroplaste zu verstehen.

Ein weiteres Ziel der Erfindung ist es, ein Einbaugehäuse gattungsgemäßer Art zu schaffen, welches in einfacher Weise und ohne zusätzliche Befestigungselemente montiert werden kann und in welchem in einfacher Weise elektrische Einbauten, insbesondere Leuchten mittels Federn oder dergleichen montiert und fixiert werden können.

Hierzu schlägt die Erfindung vor, dass mindestens die umlaufende Wandung aus elastischem Kunststoff besteht und die Wandung im Wesentlichen parallel zu einer Mittellängsachse des Einbaugehäuses ausgerichtete Stege aus formstabilem Kunststoff aufweist, die in Umfangsrichtung der Wandung voneinander beabstandet sind.

Durch die erfindungsgemäße Ausgestaltung ist es in einfacher Weise möglich, ein solches Einbaugehäuse in die Einbauöffnung in der Wand oder Decke einzusetzen, indem das Einbaugehäuse in die entsprechende Einbauöffnung von der Außenseite her eingeschoben wird. Aufgrund der Elastizität des Einbaugehäuses wird dieses beim Einbau in die entsprechende Einbauöffnung in Querrichtung bzw. bei zylindrischen Einbaugehäusen in radialer Richtung zusammengedrückt. In der Sollposition spreizt sich das Einbaugehäuse entsprechend der vorgewählten Form auf, so dass es kraftschlüssig fest in der Lochlaibung der Einbauöffnung sitzt.

Durch die im Wesentlichen parallel zur Mittellängsachse des Einbaugehäuses ausgerichteten Stege aus formstabilem Kunststoff wird erreicht, dass das Gehäuse beim Einbau in axialer Richtung nicht oder nur unwesentlich verformt wird. Dies ist besonders deswegen von Bedeutung, weil bei Hohldecken oder dergleichen hinter der Deckenfläche, die die Einbauöffnung aufweist, Matten aus Isolierstoff und Folien als Dampfsperre angeordnet sind, die beim Einbau des Einbaugehäuses von diesem in den Raum hinter der Wand oder Decke weggedrängt werden. Dadurch, dass das Einbaugehäuse die Stege aus formstabilem Kunststoff aufweist, ist es trotz dieser Belastung formhaltig und wird nicht in axialer Richtung zusammengedrückt, sodass der gewünschte Einbauraum innerhalb des Einbaugehäuses in jedem Falle sichergestellt ist.

Dadurch, dass die Wandung des Einbaugehäuses zum größten Teil aus elastischem Kunststoff besteht, ist es möglich, elektrotechnische Einbauten, insbesondere Leuchten, die mit Haltefedern ausgestattet sind, um sich an dem Innenmantel des Einbaugehäuses abstützen zu können, sicher zu positionieren und auch nach dem Einbau einen Beibehalt der Montagelage sicherzustellen, weil die Federn sich an dem elastischen Kunststoffmaterial abstützen und dabei das Gehäuse unter Umständen auch geringfügig in Querrichtung verformt wird, sodass ein sicherer Sitz der Elemente ineinander gewährleistet ist. Zudem wird durch die erfindungsgemäße Ausgestaltung erreicht, dass die Einbauten, die in dem Einbaugehäuse vorgesehen sind, nicht von Schmutzpartikeln oder Staub verunreinigt werden können, die bzw. der sich im Deckenhohlraum hinter der Decken- oder Wandfläche befinden.

Bevorzugt ist dabei vorgesehen, dass die Stege schmaler sind als die zwischen den Stegen verbleibenden Bereiche der Wandung aus elastischem Kunststoff.

Auf diese Weise ist sichergestellt, dass die Wesentlichen Wandungsbereiche des Einbaugehäuses aus elastischem Kunststoff bestehen und nur schmale Bereiche, die durch die Stege gebildet sind, aus formstabilem Kunststoff bestehen.

Bevorzugt ist zudem vorgesehen, dass die dem Boden abgewandte Mündung des Einbaugehäuses einen über den Dosenmantel vorragenden Kragen aus formstabilem Kunststoff aufweist.

Diese Ausgestaltung dient dazu, dass das Einbaugehäuse beim Einschieben in die entsprechende Einbauöffnung nicht zu weit eingeschoben werden kann. Der vorragende Kragen aus formstabilem Kunststoff bildet einen Einsteckbegrenzungsanschlag. Da die Einbauöffnung üblicher Weise mit einem Standardfräswerkzeug erzeugt wird, welches ein Randversenk an der Öffnung bildet, ist in der Einbausolllage auch sichergestellt, dass das Einbaugehäuse nicht über die Wandfläche vorragt, weil der vorragende Kragen im Randversenk der Öffnung angeordnet ist.

Hierdurch entfällt eine Nacharbeit, und es entfällt auch die Notwendigkeit eventuell Dekorringe oder dergleichen zur Abdeckung eines Öffnungsspaltes vorzusehen.

Zudem kann auch vorgesehen sein, dass der Kragen mit einem Ringkörper aus formstabilen Kunststoff ausgebildet ist, der mündungsseitig in die umlaufende Wandung des Einbaugehäuses eingebettet ist.

Hierdurch werden die Stabilität des Kragens und die Stabilität der Dosenmündung verbessert.

Vorzugsweise ist dabei vorgesehen, dass der Kragen einstückig an die Stege angeformt ist.

Ein solches Einbaugehäuse kann beispielsweise als zweikomponentiges Kunststoffelement in Kunststoffwerkzeugen gespritzt werden, wobei der Kragen einstückig an die Stege angeformt ist und beispielsweise zunächst die Hartkomponente im Wege des Spritzgießens erzeugt wird und anschließend im gleichen Werkzeug die elastische Komponente aufgeformt wird. Es ist aber auch denkbar, die Elemente aus zwei ineinander setzbaren Bauteilen zusammenzufügen, wobei das eine Bauteil beispielsweise den Kragen samt Ringkörper und die Stege beinhaltet, während das andere Element ein Dosenkörper mit Boden und umlaufender Wand aus elastischem Werkstoff ist.

Dieser elastische Körper kann auf die Bestandteile aus hartem Kunststoff aufgeschoben werden oder es können auch die Bestandteile aus hartem Kunststoff auf den Formkörper aus elastischem Kunststoff aufgeschoben werden. Somit ist dann das Einbaugehäuse fertig gestellt.

Um eine gute Abdichtung des Einbaugehäuses relativ zur Einbauöffnung in der entsprechenden Wand- oder Deckenfläche zu erreichen, ist vorgesehen, dass nahe der Mündung des Einbaugehäuses oder unmittelbar an die Mündung anschließend außen umlaufend des Mantels des Einbaugehäuses eine oder mehrere voneinander beabstandete Dichtungsrippen aus elastischem Werkstoff ausgebildet sind.

In der Einbausolllage liegen mindestens einige der Dichtungsrippen an der Laibung der Einbauöffnung an und sorgen somit für einen sicheren und dichten Halt des Einbaugehäuses in der Einbauöffnung.

Vorzugsweise ist dabei vorgesehen, dass die Dichtungsrippen unterschiedliche Außendurchmesser aufweisen und/oder in unterschiedlichem Abstand voneinander auf dem Mantel des Einbaugehäuses ausgebildet sind.

Um unterschiedliche Abstände ausgleichen zu können und eine vorzügliche Dichtung sicherzustellen, können die Dichtungsrippen unterschiedlich weit über den Mantel der Dose vorragen und/oder auch in unterschiedlichem Abstand voneinander auf den Mantel des Einbaugehäuses ausgebildet sein.

Um es zu ermöglichen, dass in ein solches Einbaugehäuse eine Leuchte auch in einer Schrägstellung eingebaut werden kann, ist vorgesehen, dass das Einbaugehäuse in seiner Wandung zwischen zwei Stegen eine Ausbuchtung aufweist, die einen Montagefreiraum für ein schräg in das Gehäuse eingesetztes elektrisches Einbauteil oder eine Leuchte bildet.

Diese Ausgestaltung ermöglicht es, ein in das Gehäuse eingesetztes elektrisches Bauteil, insbesondere eine Leuchte, in Schrägstellung innerhalb des Gehäuses anzuordnen, weil hierzu der Montagefreiraum ausgebildet ist.

Um auch eine abgedichtete Kabeleinführung durch die Wandung des Einbaugehäuses zu ermöglichen ist vorgesehen, dass das Einbaugehäuse in seiner Wandung zwischen zwei benachbarten Stegen eine Kabeleinlassöffnung aufweist, in die ein Dichtstopfen aus elastischem Kunststoff eingesetzt ist, der einen Schlitz als Kabeldurchführung aufweist.

Diese Anordnung ermöglicht es, ein Kabel ggf. samt Stecker durch die Kabeleinlassöffnung in das Gehäuseinnere einzuführen. Der Dichtstopfen aus elastischem Material kann dann auf den Kabelmantel aufgesetzt und in die Kabeleinlassöffnung des Gehäuses eingedrückt werden, sodass eine abgedichtete Kabeldurchführung erreicht ist.

Bevorzugt ist dabei vorgesehen, dass die Kabeleinlassöffnung von zwei langen zueinander parallelen Randkanten und zwei diese verbindenden kurzen Randkanten begrenzt ist, wobei die langen Randkanten parallel zu den Stegen verlaufen, zwischen welchen die Kabeleinlassöffnung ausgebildet ist, und wobei der Schlitz des Dichtstopfens in Montagesolllage parallel zu den Stegen verläuft.

Hierdurch wird sichergestellt, dass in der Einbausolllage durch die langen Randkanten und die zu diesen benachbarten Stege ausreichende quer gerichtete Druckkräfte auf die Bestandteile des Dichtstopfens ausgeübt wird, sodass dieser das durchgeführte Kabel dicht umfassen kann und dicht in die entsprechende Kabeleinlassöffnung eingesteckt werden kann.

Es wird hierdurch eine quasi luftdichte Leitungseinführung auch bei Einsatz von konfektionierten Kabeln, also Kabeln mit Steckverbindern, erreicht, wobei durch die elastische Ausbildung des Dichtstopfens eine Anpassung an unterschiedliche Kabelquerschnitte erreicht wird.

Ein Ausführungsbeispiel der Erfindung ist in der Zeichnung dargestellt und im Folgenden näher beschrieben.

Es zeigt:
- Fig.1: ein erfindungsgemäßes Einbaugehäuse in Seitenansicht;
- Fig.2: das Gleiche in Draufsicht gesehen;
- Fig.3: eine Ansicht von schräg oben;
- Fig.4: eine Ansicht von unten in das Innere des Einbaugehäuses.

In den Zeichnungen ist ein Einbaugehäuse 1 für elektrotechnische Einbauten, insbesondere für Leuchten vorzugsweise LED Leuchten gezeigt. Solche Einbaugehäuse sind dazu bestimmt, in Leichtbaudecken oder Hohldecken eingebaut zu werden, wobei die entsprechende Decke eine dem Querschnitt des Einbaugehäuses 1 angepasste Einbauöffnung aufweist, in welche das Einbaugehäuse einsetzbar ist. Das Einbaugehäuse 1 weist einen Boden 2 und eine vom Boden abragende umlaufende Wandung auf. Erfindungsgemäß besteht mindestens die umlaufende Wandung 3 aus elastischen Kunststoff, beispielsweise thermoplastischem Elastomer, darüber hinaus weist aber die Wandung 3 im Wesentlichen parallel zur einer Mittellängsachse des Einbaugehäuses 1 gerichtete Stege 4 aus formstabilem Kunststoff beispielsweise Polypropylen oder Polyamid auf, die in Umfangsrichtung der Wandung 3 voneinander beabstandet sind. Beispielsweise können auf den Umfang der Wandung verteilt etwa 12 solcher Stege 4 angeordnet sein. Die Stege 4 sind wesentlich schmaler als die zwischen den Stegen 4 verbleibenden Bereiche der Wandung 3 aus elastischem Kunststoff. Die dem Boden 2 abgewandte Mündung des Einbaugehäuses 1 weist einen über den Dosenmantel nach außen vorragenden Kragen 5 ebenfalls aus formstabilen Kunststoff auf. Dieser Kragen dient als Einsteckbegrenzung beim Montieren in der entsprechenden Einbauöffnung und sorgt für Formhaltigkeit des Einbaugehäuses 1 in der Montagesolllage. Der Kragen 5 kann mit einem Ringkörper kombiniert sein, der ebenfalls aus formstabilem Kunststoff ausgebildet ist und mündungsseitig in die umlaufende Wandung des Einbaugehäuses 1 eingebettet ist. Vorzugsweise ist der Kragen 5 einstückig an die Stege 4 angeformt.

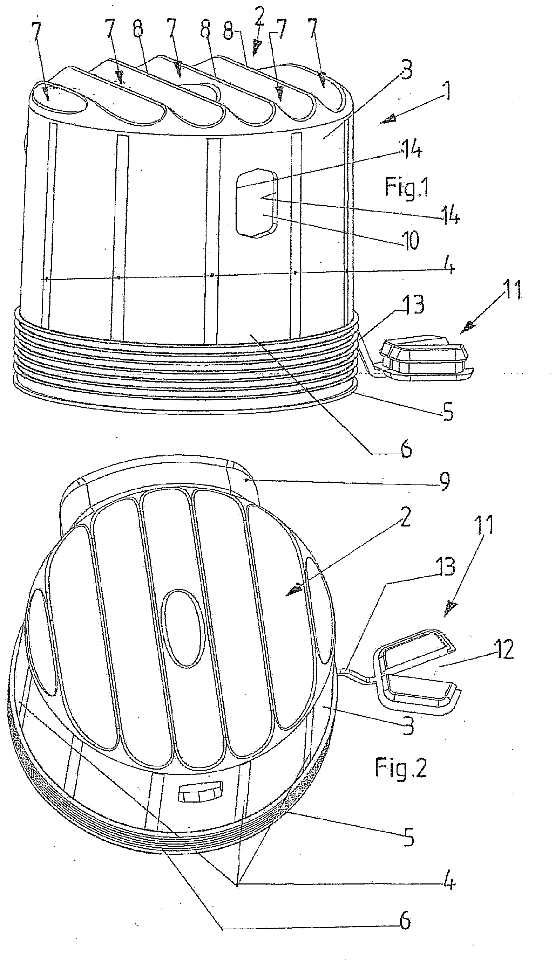

Nahe der Mündung des Einbaugehäuses 1 oder unmittelbar an dessen Mündung anschließend sind außen umlaufend des Mantels des Einbaugehäuses eine Vielzahl voneinander benachbarten Dichtungsrippen 6 aus elastischem Kunststoff ausgebildet und aufgeformt. Die Dichtungsrippen 6 können unterschiedliche Außendurchmesser aufweisen oder auch in unterschiedlichem Abstand voneinander auf den Mantel des Einbaugehäuses 1 ausgebildet sein. Eine besonders bevorzugte Weiterbildung und Ausgestaltung besteht darin, dass der Boden 2 auf seiner dem Inneren des Einbaugehäuses 1 abgewandten Fläche Wellenstrukturen 7 aufweist, die zur Seitenfläche des Einbaugehäuses 1 offen ausmündende Endbereiche bilden. Dies ist besonders gut in Figur 1 ersichtlich. Diese Rippenstrukturen oder Wellenstrukturen 7 sind aus einer Vielzahl von parallel zueinander ausgerichteten Rippen oder Wellen gebildet, wobei die Wellenstrukturen 7 breite Wellentäler bilden und die vom Boden abragenden Wellenberge 8 gegenüber den dazwischen liegenden Wellentälern schmale Bereiche sind. Diese über den Boden 2 vorragenden Endbereiche der Wellenstrukturen 7 sind unter Vermeidung scharfer Kanten gerundet. Ebenso ist der Übergangsbereich vom Boden 2 in die Wandung 3 gerundet. Kanten, insbesondere scharfe Kanten sind hierbei vermieden.

Der Boden 2 kann vollständig oder teilweise mindestens im Bereich der vorragenden Stege oder Wellenberge 8 der Wellenstrukturen 7 aus formstabilem Kunststoff bestehen. Auch ist es möglich, den Boden außenseitig mit einer Schicht von elastischem Kunststoff zu überziehen. Auch ist es möglich, den Boden 2 vollständig oder teilweise aus elastischem Kunststoff zu fertigen, wobei vorzugsweise in diesem Falle in den Boden 2 die vorragenden Stege oder Wellenberge 8 der Wellenstrukturen 7 aus formstabilen Kunststoff eingebettet sind.

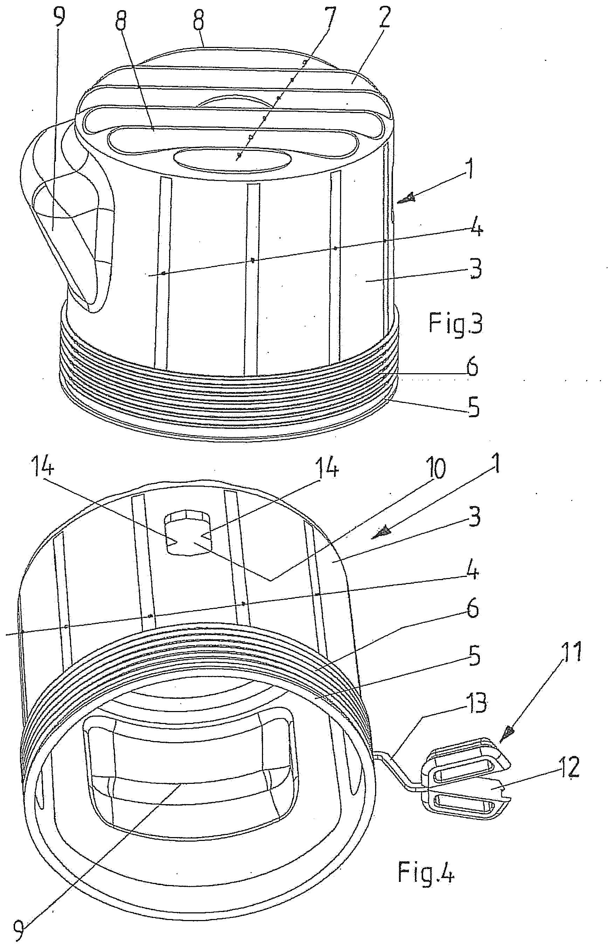

Wie besonders gut in Figur 2 bis 4 ersichtlich, weist das Einbaugehäuse 1 in seiner Wandung 3 zwischen zwei Stegen 4 eine Ausbuchtung 9 auf, die einen Montagefreiraum bildet, in den ein schräg in das Gehäuse 1 eingebautes Einbauteil beispielsweise eine Leuchte eingesetzt werden kann, sodass die Leuchtenaustrittsfläche nicht parallel zur Mündung des Einbaugehäuses ausgerichtet ist, sondern in einem Winkel hierzu.

Des Weiteren weist das Einbaugehäuse 1 in seiner Wandung 3 zwischen zwei benachbarten Stegen 4 eine Kabeleinlassöffnung 10 auf, in die ein Dichtstopfen 11 aus elastischem Kunststoff passend einsetzbar ist, der einen Schlitz 12 als Kabeldurchführung aufweist. Im Ausführungsbeispiel ist der Dichtstopfen 11 über einen Materialsteg 13 an die Dichtungsrippen 6 angespritzt. Zur Benutzung kann dieser Steg 13 durchtrennt werden, sodass dann der Dichtstopfen 11 in die Kabeleinlassöffnung 10 eingedrückt werden kann.

Die Kabeleinlassöffnung 10 ist von zwei langen, zueinander parallelen Randkanten 14 begrenzt sowie von einer oberen und unteren Kante, wie in Figur 1 ersichtlich ist. Die langen Randkanten 14 verlaufen parallel zu den benachbarten Stegen 4, zwischen welchen die Kabeleinlassöffnung 10 ausgebildet ist, wobei in der Montagesolllage der Schlitz 12 des Dichtstopfens 11 parallel zu den Stegen 4 ausgerichtet ist. Hierdurch wird erreicht, dass in der Montagesolllage ausreichende Druckkräfte auf den elastischen Dichtstopfen 11 quer zum Verlauf des Längsschlitzes 12 ausgeübt werden, sodass eine vorzügliche Abdichtung des durchgeführten Kabels erreicht wird.

## Patentansprüche

1. Einbaugehäuse (1) für elektrotechnische Einbauten und Leuchten zum Einbau im Leichtbauhohldecken oder -wände, wobei diese eine dem Querschnitt des Einbaugehäuses (1) angepasste Einbauöffnung aufweisen, in die das Einbaugehäuse (1) einsetzbar ist, wobei das Einbaugehäuse (1) einen Boden (2) und eine vom Boden (2) abragende umlaufende Wandung (3) aufweist, wobei der Boden (2) mindestens außenseitig auf seiner dem Inneren des Einbaugehäuses (1) abgewandten Fläche Wellenstrukturen (7) aufweist, **dadurch gekennzeichnet, dass** die Wellenstrukturen (7) zum Boden (2) hin oder in der Bodenfläche breite Wellentäler bilden und die vom Boden (2) abragenden Wellenberge (8) durch gegenüber den Wellentälern schmalere Bereiche gebildet sind.

2. Einbaugehäuse nach Anspruch 1, **dadurch gekennzeichnet, dass** die Wellenstrukturen (7) zur Seitenfläche des Einbaugehäuses (1) offen ausmündende Endbereiche aufweisen.

3. Einbaugehäuse nach Anspruch 1 oder Anspruch 2, **dadurch gekennzeichnet, dass** die Wellenstrukturen (7) aus einer Vielzahl von parallel zueinander ausgerichteten Wellen gebildet sind.

4. Einbaugehäuse nach einem der Ansprüche 1 bis 3, **dadurch gekennzeichnet, dass** die über den Boden (2) vorragenden Endbereiche der Wellenstrukturen (7) unter Vermeidung scharfer Kanten gerundet sind.

5. Einbaugehäuse nach einem der Ansprüche 1 bis 4, **dadurch gekennzeichnet, dass** der Übergangsbereich vom Boden (2) in die Wandung (3) gerundet ist.

6. Einbaugehäuse nach einem der Ansprüche 1 bis 5, **dadurch gekennzeichnet, dass** der Boden (2) vollständig oder teilweise mindestens im Bereich der Wellenberge (8) der Wellenstrukturen (7) aus formstabilem Kunststoff, nämlich Thermoplasten oder Duroplasten besteht.

7. Einbaugehäuse nach einem der Ansprüche 1 bis 6, **dadurch gekennzeichnet, dass** der Boden (2) außenseitig von einer Schicht aus elastischem Kunststoff, nämlich Elastomeren oder Thermoelasten überzogen ist.

8. Einbaugehäuse nach einem der Ansprüche 1 bis 7, **dadurch gekennzeichnet, dass** der Boden (2) vollständig oder teilweise aus elastischem Kunststoff, nämlich Elastomeren oder Thermoplasten besteht.

9. Einbaugehäuse nach Anspruch 8, **dadurch gekennzeichnet, dass** in den Boden (2) die Wellenberge (8) der Wellenstrukturen (7) aus formstabilen Kunststoff, nämlich Thermoplasten oder Duroplasten integriert sind.

10. Einbaugehäuse nach einem der Ansprüche 1 bis 9, **dadurch gekennzeichnet, dass** mindestens die umlaufende Wandung (3) aus elastischem elastomerem oder thermoplastischem Kunststoff besteht und die umlaufende Wandung (3) im Wesentlichen parallel zu einer Mittellängsachse des Einbaugehäuses (1) ausgerichtete Stege (4) aus formstabilem, thermoplastischem oder duroplastischem Kunststoff aufweist, die in Umfangsrichtung der umlaufende Wandung (3) voneinander beabstandet sind.

11. Einbaugehäuse nach einem Anspruch 10, **dadurch gekennzeichnet, dass** die Stege (4) schmaler sind als die zwischen den Stegen (4) verbleibenden Bereiche der umlaufenden Wandung (3) aus elastischem elastomerem oder thermoelastischem Kunststoff.

12. Einbaugehäuse nach einem der Ansprüche 10 oder 11, **dadurch gekennzeichnet, dass** eine dem Boden (2) abgewandte Mündung des Einbaugehäuses (1) einen über einen Dosenmantel nach außen vorragenden Kragen (5) aus formstabilem, thermoplastischem oder duroplastischem Kunststoff aufweist.

13. Einbaugehäuse nach Anspruch 12, **dadurch gekennzeichnet, dass** der Kragen (5) mit einem Ringkörper aus formstabilen thermoplastischem oder duroplastischem Kunststoff ausgebildet ist, der mündungsseitig in die umlaufende Wandung (3) des Einbaugehäuses (1) eingebettet ist.

14. Einbaugehäuse nach Anspruch 12 oder 13, **dadurch gekennzeichnet, dass** der Kragen (5) einstückig an die Stege (4) angeformt ist.

15. Einbaugehäuse nach einem der Ansprüche 10 bis 14, **dadurch gekennzeichnet, dass** nahe einer Mündung des Einbaugehäuses (1) oder unmittelbar an die Mündung anschließend außen umlaufend der umlaufenden Wandung (3) des Einbaugehäuses (1) eine oder mehrere voneinander beabstandete Dichtungsrippen (6) aus elastischem elastomerem oder thermoplastischem Werkstoff ausgebildet sind.

16. Einbaugehäuse nach Anspruch 15, **dadurch gekennzeichnet, dass** die Dichtungsrippen (6) unterschiedliche Außendurchmesser aufweisen und/oder in unterschiedlichem Abstand voneinander auf der umlaufenden Wandung (3) des Einbaugehäuses (1) ausgebildet sind.

17. Einbaugehäuse nach einem der Ansprüche 10 bis 16, **dadurch gekennzeichnet, dass** das Einbaugehäuse (1) in seiner Wandung zwischen zwei Stegen (4) eine Ausbuchtung (9) aufweist, die einen Montagefreiraum für ein schräg in das Gehäuse eingesetztes elektrisches Einbauteil oder eine Leuchte bildet.

18. Einbaugehäuse nach einem der Ansprüche : 10 bis 17, **dadurch gekennzeichnet, dass** das Einbaugehäuse (1) in seiner umlaufenden Wandung (3) zwischen zwei benachbarten Stegen (4) eine Kabeleinlassöffnung (10) aufweist, in die ein Dichtstopfen (11) aus elastischem elastomerem oder thermoelastischem Kunststoff passend eingesetzt ist, der einen Schlitz (12) als Kabeldurchführung aufweist.

19. Einbaugehäuse nach Anspruch 18, **dadurch gekennzeichnet, dass** die Kabeleinlassöffnung (10) von zwei langen zueinander parallelen Randkanten (14) und zwei diese verbindenden kurzen Randkanten begrenzt ist, wobei die langen Randkanten (14) parallel zu den Stegen (4) verlaufen, zwischen welchen die Kabeleinlassöffnung (10) ausgebildet ist, und wobei der Schlitz (12) des Dichtstopfens (11) in Montagesolllage parallel zu den Stegen (4) verläuft.

## Claims

1. A built-in housing (1) for electrical installations and lights to be installed in lightweight hollow ceilings or walls including an installation hole adapted to the cross-section of the built-in housing (1), in which installation hole the built-in housing (1) can be fitted, the built-in housing (1) including a bottom (2) and a circumferential wall (3) extending from the bottom (2), the bottom (2) including wave structures (7) at least on its exterior side on its surface showing away from the interior of the built-in housing (1), **characterized by that** the wave structures (7) form wide wave troughs towards the bottom (2) or in the bottom surface, and that the wave crests (8) extending from the bottom (2) are formed by narrower sections compared to the wave troughs.

2. The built-in housing according to claim 1, **characterized by that** the wave structures (7) include end sections being open toward the side face of the built-in housing (1).

3. The built-in housing according to claim 1 or claim 2, **characterized by that** the wave structures (7) are formed of a multitude of waves aligned in parallel to each other.

4. The built-in housing according to one of claims 1 to 3, **characterized by that** the end sections of the wave structures (7) projecting beyond the bottom (2) are rounded avoiding any sharp edges.

5. The built-in housing according to one of claims 1 to 4, **characterized by that** the transition section from the bottom (2) to the wall (3) is rounded.

6. The built-in housing according to one of claims 1 to 5, **characterized by that** the bottom (2) is made completely or partially, at least in the region of the wave crests (8) of the wave structures (7), of a dimensionally stable plastic material, namely thermoplastics or thermosets.

7. The built-in housing according to one of claims 1 to 6, **characterized by that** the bottom (2) is coated on its exterior side with a layer of an elastic plastic material, namely elastomers or thermoelasts.

8. The built-in housing according to one of claims 1 to 7, **characterized by that** the bottom (2) completely or partially consists of an elastic plastic material, namely elastomers or thermoplasts.

9. The built-in housing according to claim 8, **characterized by that** in the bottom (2) are integrated the wave crests (8) of the wave structures (7) of a dimensionally stable plastic material, namely thermoplasts or thermosets.

10. The built-in housing according to one of claims 1 to 9, **characterized by that** at least the circumferential wall (3) consists of an elastic elastomeric or thermoplastic plastic material, and the circumferential wall (3) comprises webs (4) of a dimensionally stable, thermoplastic or thermoset plastic material extending substantially in parallel to a central longitudinal axis of the built-in housing (1) and being spaced to each other in the circumferential direction of the circumferential wall (3).

11. The built-in housing according to claim 10, **characterized by that** the webs (4) are narrower than the regions of the circumferential wall (3) of an elastic elastomeric or thermoelastic plastic material remaining between the webs (4).

12. The built-in housing according to one of claims 10 or 11, **characterized by that** an orifice of the built-in housing (1) showing away from the bottom (2) includes a collar (5) of a dimensionally stable, thermoplastic or thermoset plastic material outwardly projecting beyond an envelope of the box.

13. The built-in housing according to claim 12, **characterized by that** the collar (5) is formed with an annular body of a dimensionally stable thermoplastic or thermoset plastic material that is embedded at the side of the orifice in the circumferential wall (3) of the built-in housing (1).

14. The built-in housing according to claim 12 or 13, **characterized by that** the collar (5) is integrally formed with the webs (4).

15. The built-in housing according to one of claims 10 to 14, **characterized by that** close to an orifice of the built-in housing (1) or immediately following to the outside of the circumferential wall (3) of the built-in housing (1), one or more spaced sealing ribs (6) of an elastic elastomeric or thermoplastic material are formed.

16. The built-in housing according to claim 15, **characterized by that** the sealing ribs (6) have different outer diameters and/or are formed in different distances from each other on the circumferential wall of the built-in housing (1).

17. The built-in housing according to one of claims 10 to 16, **characterized by that** the built-in housing (1) includes in its wall between two webs (4) a bulge (9) forming a free space of mounting for an electrical built-in part or a light inclinedly inserted into the housing.

18. The built-in housing according to one of claims 10 to 17, **characterized by that** the built-in housing (1) includes in its circumferential wall (3) between two adjacent webs (4) a cable inlet opening (10), in which a sealing plug (11) of an elastic elastomeric or thermoelastic plastic material is fitted in a matching manner that includes a slot (12) as a cable passage.

19. The built-in housing according to claim 18, **characterized by that** the cable inlet opening (10) is limited by two long parallel border edges (14) and two short border edges connecting them, the long border edges (14) extending in parallel to the webs (4), between which the cable inlet opening (10) is formed, and the slot (12) of the sealing plug (11) extending, in the intended mounting position, in parallel to the webs (4).

## Revendications

1. Boîtier de montage (1) pour installations et éclairages électriques pour le montage dans des plafonds creux ou parois creuses en construction légère comportant un trou d'installation adapté à la section en coupe du boîtier de montage (1), dans lequel le boîtier de montage (1) peut être inséré, le boîtier de montage (1) comportant un fond (2) et une paroi circonférentielle (3) s'étendant à partir du fond (2), le fond (2) comportant des structures d'onde (7) au moins sur son côté extérieur sur sa surface opposée à l'intérieur du boîtier de montage (1), **caractérisé en ce que** les structures d'onde (7) forment des cavités d'ondulation larges vers le fond (2) ou dans la surface du fond, et que les sommets d'ondulation (8) s'étendant à partir du fond (2) sont formés par des sections étroites en comparaison avec les cavités d'ondulation.

2. Boîtier de montage selon la revendication 1, **caractérisé en ce que** les structures d'onde (7) comportent des sections d'extrémité étant ouvertes vers la surface latérale du boîtier de montage (1).

3. Boîtier de montage selon la revendication 1 ou la revendication 2, **caractérisé en ce que** les structures d'onde (7) sont formées à partir d'une multitude d'ondes alignées en parallèle.

4. Boîtier de montage selon une des revendications 1 à 3, **caractérisé en ce que** les sections d'extrémité des structures d'onde (7) faisant saillie au-delà du fond (2) sont arrondies sans des arêtes vives.

5. Boîtier de montage selon une des revendications 1 à 4, **caractérisé en ce que** la zone de transition du fond (2) dans la paroi (3) est arrondie.

6. Boîtier de montage selon une des revendications 1 à 5, **caractérisé en ce que** le fond (2) est complètement ou partiellement au moins dans la région des sommets d'ondulation (8) des structures d'onde (7) en une matière plastique indéformable, c'est-à-dire des thermoplastiques ou thermodurcissables.

7. Boîtier de montage selon une des revendications 1 à 6, **caractérisé en ce que** le fond (2) est recouvert sur son côté extérieur d'une couche en une matière plastique élastique, c'est-à-dire des élastomères ou thermoélastiques.

8. Boîtier de montage selon une des revendications 1 à 7, **caractérisé en ce que** le fond (2) consiste complètement ou partiellement en une matière plastique élastique, c'est-à-dire des élastomères ou thermoplastiques.

9. Boîtier de montage selon la revendication 8, **caractérisé en ce que** dans le fond (2) sont intégrés les sommets d'ondulation (8) des structures d'onde (7) en une matière plastique indéformable, c'est-à-dire des thermoplastiques ou thermodurcissables.

10. Boîtier de montage selon une des revendications 1 à 9, **caractérisé en ce qu'**au moins la paroi circonférentielle (3) consiste en une matière plastique élastique élastomérique ou thermoplastique, et la paroi circonférentielle (3) comprend des entretoises (4) en une matière plastique thermoplastique ou thermodurcissable indéformable s'étendant essentiellement en parallèle à l'axe longitudinal central du boîtier de montage (1), ces entretoises (4) étant espacées l'une de l'autre dans la direction circonférentielle de la paroi circonférentielle (3).

11. Boîtier de montage selon la revendication 10, **caractérisé en ce que** les entretoises (4) sont plus étroites que les régions de la paroi circonférentielle (3) en une matière plastique élastomérique élastique ou thermoélastique restantes entre les entretoises (4).

12. Boîtier de montage selon une des revendications 10 ou 11, **caractérisé en ce qu'**une orifice du boîtier de montage (1) opposée au fond (2) comporte un col (5) en une matière plastique thermoplastique ou thermodurcissable indéformable faisant saillie vers l'extérieur au-delà d'une enveloppe du boîtier.

13. Boîtier de montage selon la revendication 12, **caractérisé en ce que** le col (5) est formé avec un corps annulaire en une matière plastique thermoplastique ou thermodurcissable indéformable qui est noyé au côté de l'orifice dans la paroi circonférentielle (3) du boîtier de montage (1).

14. Boîtier de montage selon la revendication 12 ou 13, **caractérisé en ce que** le col (5) est formé en une seule pièce avec les entretoises (4).

15. Boîtier de montage selon une des revendications 10 à 14, **caractérisé en ce que** près d'une orifice du boîtier de montage (1) ou immédiatement à côté de l'extérieur de la paroi circonférentielle (3) du boîtier de montage (1), une ou plusieurs nervures d'étanchéité (6) espacées en une matière élastomérique élastique ou thermoplastique sont formées.

16. Boîtier de montage selon la revendication 15, **caractérisé en ce que** les nervures d'étanchéité (6) ont des diamètres extérieurs différents et/ou sont formées à des distances différentes l'une de l'autre sur la paroi circonférentielle (3) du boîtier de montage (1).

17. Boîtier de montage selon une des revendications 10 à 16, **caractérisé en ce que** le boîtier de montage (1) comporte dans sa paroi entre deux entretoises (4) un décrochement (9) formant un espace libre de montage pour une pièce de montage électrique ou un éclairage inséré de façon inclinée dans le boîtier.

18. Boîtier de montage selon une des revendications 10 à 17, **caractérisé en ce que** le boîtier de montage (1) comporte dans sa paroi circonférentielle (3) entre deux entretoises (4) voisines une ouverture d'introduction de câble (10), dans laquelle un bouchon d'étanchéité (11) en une matière plastique élastomérique élastique ou thermoélastique est inséré en ajustement précis, qui comporte une fente (12) comme passage de câble.

19. Boîtier de montage selon la revendication 18, **caractérisé en ce que** l'ouverture d'introduction de câble (10) est limitée par deux arêtes de bord (14) parallèles longues et deux arêtes de bord courtes liant celles-ci, les arêtes de bord (14) longues s'étendant en parallèle aux entretoises (4), entre lesquelles l'ouverture d'introduction de câble (10) est formée, et la fente (12) du bouchon d'étanchéité (11) s'étendant, dans la position de montage de consigne, en parallèle aux entretoises (4).
